# EUROPÄISCHE PATENTSCHRIFT

(11) **EP 1 440 763 B1**
(45) Veröffentlichungstag und Bekanntmachung des Hinweises auf die Patenterteilung: **17.05.2006**
(21) Anmeldenummer: 04100263.5
(22) Anmeldetag: 26.01.2004
(51) Int. Cl.: B23Q 1/48, B23Q 9/00

(54) **Führungsschienensystem für eine Werkzeugmaschine**
System of guide rails for a machine tool
Système de rails de guidage pour une machine-outil

(30) Priorität: 27.01.2003 DE 10303008
(43) Veröffentlichungstag der Anmeldung: 28.07.2004
(73) Patentinhaber: HILTI Aktiengesellschaft, 9494 Schaan (LI)
(72) Erfinder: REITBERGER, Rudolf, 81379, München (DE)
(74) Vertreter: Wildi, Roland

(56) Entgegenhaltungen:
- EP-A- 0 547 289
- DE-A- 4 011 042

## Beschreibung

Die Erfindung bezeichnet ein Führungsschienensystem für eine Führungsschiene für eine Werkzeugmaschine, insbesondere eine schwenkbare Schienenverzweigung für eine Kembohrmaschine.

Die beim Kernbohren von Gestein notwendigen hohen Drehmomente und Vorschubkräfte werden üblicherweise von der Werkzeugmaschine gegen einen Maschinenständer aufgebracht, der fest mit dem Untergrund verbunden ist. Dabei werden die Kräfte von der Werkzeugmaschine über einen versetzbaren, mit einem Maschinenkupplungsteil zur zentralen Befestigung der Werkzeugmaschine ausgebildeten, Führungsschlitten symmetrisch auf eine Führungsschiene und weiter über eine Bodenplatte in den Untergrund übertragen. Zur Durchführung der verschiedenen, insbesondere im Baugewerbe benötigten, Kernbohrvarianten ist ein vom Nutzer vor Ort aus Grundkomponenten universell kombinierbares Schienensystem erforderlich, welches insbesondere zumindest zwei Führungsschienen und zumindest je eine Bodenplatte mit einem Schienenkupplungsteil, einem Führungsschlitten mit einem Maschinenkupplungsteil und eine Schienenverzweigung mit einem Schienenkupplungsteil umfasst und im Bedarfsfall mit einzelnen Grundkomponenten ergänzt wird.

Nach der DE4011042 weist ein Führungsschienensystem für eine Werkzeugmaschine eine seitlich zu einer ersten Führungsschiene versetzbare, schwenkversetzbar festlegbare Schienenverzweigung zu einer zweiten Führungsschiene auf. Durch die seitliche, d.h. nicht symmetrisch zur Flächenträgheitsachse der Führungsschiene, über die Schienenverzweigung montierte zweite Führungsschiene rufen die hohen Drehmomente und Vorschubkräfte unerwünschte Verdrehungen innerhalb der mit dem Untergrund verbundenen ersten Führungsschiene hervor. Zudem ist die schwenkbare Schienenverzweigung, welche selbst wie ein Führungsschlitten versetzbar ist, sehr massereich ausgebildet.

Die Aufgabe besteht in der Realisierung eines torsionssteifen Führungsschienensystems für eine Werkzeugmaschine. Ein weiterer Aspekt besteht in der Verringerung der Masse der verschiedenen Grundkomponenten eines Schienensystems.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein Führungsschienensystem für eine Werkzeugmaschine, bestehend aus zumindest zwei Führungsschienen, zumindest einem auf den Führungsschienen versetzbaren Führungsschlitten mit einem Maschinenkupplungsteil zur Befestigung der Werkzeugmaschine, einer Bodenplatte mit einem Schienenkupplungsteil sowie einer Schienenverzweigung, eine an einer Führungsschiene versetzbare Schienenverzweigung zu der weiteren Führungsschiene auf, wobei die Schienenverzweigung einen Maschinenkupplungsteil aufweist.

Indem die Schienenverzweigung einen Maschinenkupplungsteil aufweist, ist die Schienenverzweigung in dem zugeordneten Maschinenkupplungsteil eines Führungsschlittens befestigbar und somit stets zentral, d.h. symmetrisch zur Flächenträgheitsachse, mit der Führungsschiene verbunden, wodurch keine Torsionskräfte auftreten. Zudem ist die nur einen Maschinenkupplungsteil zur Befestigung an einem versetzbaren Führungsschlitten ausbildende Schienenverzweigung diesbezüglich mit einem Führungsschlitten modular aufgeteilt und somit massearm ausgebildet. Da die Schienenverzweigung über das Maschinenkupplungsteil in Form eines Adapters in einen üblichen Führungsschlitten eingehängt ist, bedarf es bei einem Umbau des Führungsschienensystems mit /ohne Schienenverzweigung zur Befestigung der Werkzeugmaschine keiner Änderung des Führungsschlittens.

Vorteilhaft weist die Schienenverzweigung einen Schienenkupplungsteil auf, wodurch beliebige Führungsschienen mit dieser vor Ort kombinierbar sind.

Vorteilhaft ist die Schienenverzweigung im Schienenkupplungsteil schwenkversetzbar festlegbar ausgebildet, wodurch das Schienensystem universeller einsetzbar ist.

Vorteilhaft entspricht der Schienenkupplungsteil der Schienenverzweigung dem Schienenkupplungsteil der Bodenplatte, wodurch eine Führungsschiene wahlweise mit der Schienenverzweigung oder mit der Bodenplatte kombinierbar ist.

Vorteilhaft ist der Schienenkupplungsteil als querliegender Zylinder ausgebildet, welcher endseitig jeweils in Befestigungsohren eingelassen ist, wodurch mit einem zugeordneten endseitigen Kupplungsteil der Führungsschiene in Form einer quer liegenden Zylinderbohrung, endseitig ein torsionssteifes, querschwenkbares Gelenk ausbildbar ist.

Vorteilhaft ist das dem quer liegenden Zylinder zugeordnete endseitige Kupplungsteil der Führungsschiene als eine längs dieser geschlitzte, querliegende Zylinderbohrung ausgeführt, die im Schlitzbereich mit einer Spannschraube verspannbar ist, wodurch ein spielfreies und reibkrafischlüssig festlegbares Gelenk ausbildbar ist.

Die Erfindung wird bezüglich eines vorteilhaften Ausführungsbeispiels näher erläutert mit:
- Fig. 1: als Führungsschienensystem in Seitenansicht
- Fig. 2: als Schienenverzweigung in Perspektivdarstellung
- Fig. 3: als Schienenkupplungsteil einer Führungsschiene im Teil-Längsschnitt

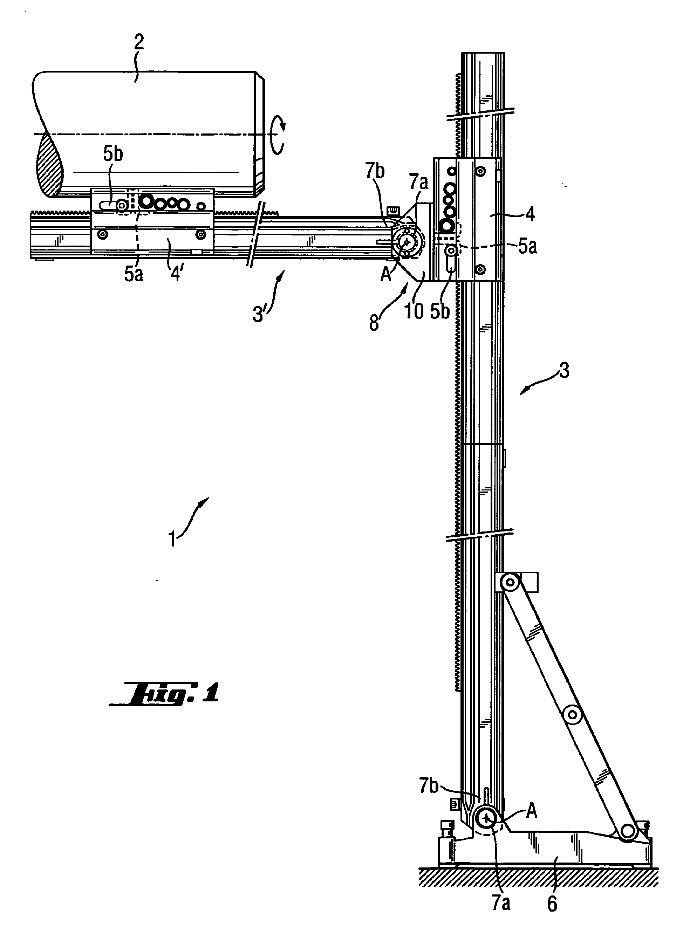

Nach Fig. 1 besteht ein Führungsschienensystem 1 für eine nur angedeutete Werkzeugmaschine 2 aus zwei Führungsschienen 3, 3', zwei auf den Führungsschienen 3, 3' versetzbaren Führungsschlitten 4, 4' mit einem ersten Maschinenkupplungsteil 5a zur Befestigung der Werkzeugmaschine 2, einer Bodenplatte 6 mit einem ersten Schienenkupplungsteil 7a und einer Schienenverzweigung 8. Die an einer Führungsschiene 3 mit einem weiteren Führungsschlitten 4 versetzbare Schienenverzweigung 8 zu der anderen Führungsschiene 3' ist zentral über einen zugeordneten zweiten Maschinenkupplungsteil 5b mit dem weiteren Führungsschlitten 4' verbunden. Zudem ist das erste Schienenkupplungsteil 7a der Schienenverzweigung 8 mit einem zugeordneten zweiten Schienenkupplungsteil 7b der anderen Führungsschiene 3' verbunden. Die Schienenverzweigung 8 ist im ersten Schienenkupplungsteil 7a, welcher dem ersten Schienenkupplungsteil 7a der Bodenplatte 6 entspricht, jeweils um eine Schwenkachse A schwenkversetzbar festgelegt.

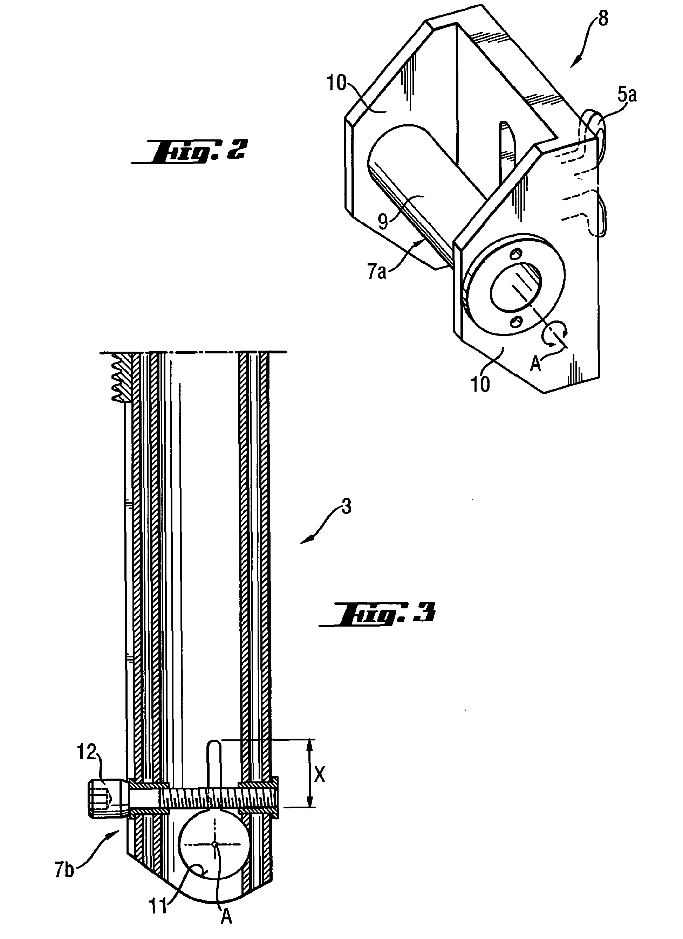

Nach Fig. 2 ist bei der Schienenverzweigung 8 mit einem widerhakenförmigen ersten Maschinenkupplungsteil 5a der zentral gegenüber angeordnete erste Schienenkupplungsteil 7a als querliegender Zylinder 9 ausgebildet, welcher endseitig jeweils in Befestigungsohren 10 eingelassen ist.

Nach Fig. 3 ist das dem quer liegenden Zylinder 9 zugeordnete endseitige zweite Schienenkupplungsteil 7b der nur teilweise dargestellten Führungsschiene 3 als eine längs dieser geschlitzte, querliegende Zylinderbohrung 11 ausgeführt, die im Schlitzbereich X mit einer Spannschraube 12 verspannbar ist.

## Patentansprüche

1. Führungsschienensystem für eine Werkzeugmaschine (2), bestehend aus zumindest zwei Führungsschienen (3, 3'), zumindest einem auf den Führungsschienen (3, 3') versetzbaren Führungsschlitten (4, 4') mit einem Maschinenkupplungsteil (5a, 5b) zur Befestigung der Werkzeugmaschine (2), einer Bodenplatte (6) mit einem Schienenkupplungsteil (7a, 7b) und einer an der Führungsschiene (3) versetzbaren Schienenverzweigung (8) zu der weiteren Führungsschiene (3'), **dadurch gekennzeichnet, dass** die Schienenverzweigung (8) einen Maschinenkupplungsteil (5a, 5b) aufweist.

2. Führungsschienensystem nach Anspruch 1, **dadurch gekennzeichnet, dass** die Schienenverzweigung (8) einen Schienenkupplungsteil (7a, 7b) aufweist.

3. Führungsschienensystem nach Anspruch 2, **dadurch gekennzeichnet, dass** der Schienenkupplungsteil (7a, 7b) der Schienenverzweigung (8) dem Schienenkupplungsteil (7a, 7b) der Bodenplatte (6) entspricht.

4. Führungsschienensystem nach Anspruch 2 oder 3, **dadurch gekennzeichnet, dass** die Schienenverzweigung (8) im Schienenkupplungsteil (7a, 7b) schwenkversetzbar festlegbar ausgebildet ist.

5. Führungsschienensystem nach Anspruch 4, **dadurch gekennzeichnet, dass** der Schienenkupplungsteil (7a) als querliegender Zylinder (9) ausgebildet ist, welcher endseitig jeweils in Befestigungsohren (10) eingelassen ist.

6. Führungsschienensystem nach Anspruch 5, **dadurch gekennzeichnet, dass** das dem quer liegenden Zylinder (9) zugeordnete endseitige Schienenkupplungsteil (7a, 7b) der Führungsschiene (3, 3') als eine längs dieser geschlitzte, querliegende Zylinderbohrung (11) ausgeführt ist, die im Schlitzbereich (X) mit einer Spannschraube (12) verspannbar ist.

## Claims

1. System of guide rails for a machine tool (2), consisting of at least two guide rails (3, 3'); at least one guide carriage (4, 4') displaceable on the guide rails (3, 3') and having a machine coupling part (5a, 5b) for attaching the machine tool (2); a base plate (6) having a rail coupling part (7a, 7b), and a junction (8) to the further guide rail (3'), which junction (8) is displaceable on the guide rail (3), **characterised in that** the junction (8) includes a machine coupling part (5a, 5b).

2. System of guide rails according to claim 1, **characterised in that** the junction (8) includes a rail coupling part (7a, 7b).

3. System of guide rails according to claim 2, **characterised in that** the rail coupling part (7a, 7b) of the junction (8) corresponds to the rail coupling part (7a, 7b) of the base plate (6).

4. System of guide rails according to claim 2 or 3, **characterised in that** the junction (8) is configured to be swivellably lockable in the rail coupling part (7a, 7b).

5. System of guide rails according to claim 4, **characterised in that** the rail coupling part (7a) is in the form of a transversely disposed cylinder (9) which is inserted in fixing lugs (10) at each end.

6. System of guide rails according to claim 5, **characterised in that** the rail coupling part (7a, 7b) at the end of the guide rail (3, 3') associated with the transversely disposed cylinder (9) is in the form of a transverse cylinder bore (11) slotted longitudinally with respect to the guide rail (3, 3'), which cylinder bore (11) is clampable with a clamping screw (12) in the slot area (X).

## Revendications

1. Système de rails de guidage pour une machine-outil (2), constitué d'au moins deux rails de guidage (3, 3'), d'au moins un chariot de guidage (4, 4') déplaçable sur les rails de guidage (3, 3') et comprenant une pièce d'accouplement de machine (5a, 5b) pour la fixation de la machine-outil (2), d'un socle (6) avec une pièce d'accouplement de rails (7a, 7b) et d'un embranchement de rails (8), déplaçable sur le rail de guidage (3), vers l'autre rail de guidage (3'), **caractérisé en ce que** l'embranchement de rails (8) comporte une pièce d'accouplement de machine (5a, 5b).

2. Système de rails de guidage selon la revendication 1, **caractérisé en ce que** l'embranchement de rails (8) comporte une pièce d'accouplement de rails (7a, 7b).

3. Système de rails de guidage selon la revendication 2, **caractérisé en ce que** la pièce d'accouplement de rails (7a, 7b) de l'embranchement de rails (8) correspond à la pièce d'accouplement de rails (7a, 7b) du socle (6).

4. Système de rails de guidage selon la revendication 2 ou 3, **caractérisé en ce que** l'embranchement de rails (8) est conçu pour pouvoir être bloqué, après pivotement, dans la pièce d'accouplement de rails (7a, 7b).

5. Système de rails de guidage selon la revendication 4, **caractérisé en ce que** la pièce d'accouplement de rails (7a) est conformée en cylindre transversal (9), lequel est logé par chacune de ses extrémités dans des pattes de fixation (10).

6. Système de rails de guidage selon la revendication 5, **caractérisé en ce que** la pièce d'extrémité d'accouplement de rails (7a, 7b), associée au cylindre transversal (9), du rail de guidage (3, 3') est conformée en trou cylindrique transversal (11), lequel est fendu dans le sens longitudinal dudit rail de guidage et peut être serré dans la zone de la fente (X) au moyen d'une vis de serrage (12).
